# EUROPÄISCHE PATENTSCHRIFT

(11) **EP 3 271 594 B1**
(45) Veröffentlichungstag und Bekanntmachung des Hinweises auf die Patenterteilung: **22.09.2021**
(21) Anmeldenummer: 16710126.0
(22) Anmeldetag: 10.03.2016
(51) Int. Cl.: F16B 2/24, F16B 5/02, F16B 41/00

(54) **VERBINDUNGSANORDNUNG ZUM AUSGLEICH FERTIGUNGS- UND/ODER MONTAGEBEDINGTER TOLERANZEN ZWISCHEN BAUTEILEN**
CONNECTION ARRANGEMENT FOR COMPENSATING FOR PRODUCTION- AND/OR ASSEMBLY-INDUCED TOLERANCES BETWEEN COMPONENTS
DISPOSITIF DE RACCORDEMENT POUR COMPENSER DES TOLÉRANCES DE FABRICATION ET/OU DE MONTAGE ENTRE DES COMPOSANTS

(30) Priorität: 16.03.2015 DE 102015204729
(43) Veröffentlichungstag der Anmeldung: 24.01.2018
(73) Patentinhaber: Bombardier Transportation GmbH, 10785 Berlin (DE)
(72) Erfinder: SCHUBERT, Mirko, 01157 Dresden (DE); LINDNER, Jens, 01309 Dresden (DE)
(74) Vertreter: Patentanwälte Bressel und Partner mbB
(86) Internationale Anmeldenummer: PCT/EP2016/055088
(87) Internationale Veröffentlichungsnummer: WO 2016/146466

(56) Entgegenhaltungen:
- DE-A1- 10 151 383
- US-A- 2 748 906
- US-A- 3 189 077
- US-A- 3 772 987
- US-A1- 2012 003 034

## Beschreibung

Die Erfindung betrifft eine Verbindungsanordnung zum Ausgleich fertigungs- und/oder montagebedingter Toleranzen zwischen Bauteilen und ein Verfahren zur Herstellung einer Verbindung zwischen einem ersten Bauteil und einem zweiten Bauteil mit Ausgleich fertigungs- und/oder montagebedingter Toleranzen zwischen den Bauteilen.

Beim Bau von Schienenfahrzeugen werden in einen Wagenkastenrohbau zur Innenverkleidung Verkleidungsteile angebracht, beispielsweise Wandverkleidungen, Fensterverkleidungen und Deckenverkleidungen.

Bei einem Wagenkastenrohbau treten Fertigungstoleranzen in verschiedenen Raumrichtungen auf, die beim Anbringen der Verkleidungsteile berücksichtigt bzw. ausgeglichen werden müssen.

Die DE 10151383 A1 offenbart eine Toleranzausgleichsanordnung zum selbsttätigen Ausgleich fertigungs-und/oder montagebedingter Toleranzen im Abstand zwischen einem ersten und einem zweiten Bauteil. Verwendet wird eine Schraube mit einem Außengewinde einer ersten Gangrichtung, die durch die beiden Bauteile hindurch steckbar und mit ihrem Kopf an dem ersten Bauteil abstützbar ist, eine Mutter mit einem Innengewinde einer entgegengesetzten zweiten Gangrichtung, die mit dem zweiten Bauteil fest verbunden ist, und eine Ausgleichsbuchse, die eine durchgehende Bohrung, ein Außengewinde der zweiten Gangrichtung passend zum Innengewinde der Mutter sowie einen Klemmabschnitt hat, durch den die Ausgleichsbuchse durch Reibschluss mit der Schraube verbindbar ist, wohingegen sie bei Überwindung des Reibschlusses relativ zur Schraube drehbar ist. Wenn die Schraube in die Ausgleichsbuchse eingesteckt und gedreht wird, dreht die Ausgleichsbuchse durch Reibschluss mit und wird entgegen der Einsteckrichtung aus der Mutter zwecks Toleranzausgleich herausgeschraubt. Wenn sich die Ausgleichsbuchse an das erste Bauteil angelegt hat, ist die Schraube mit einem Innengewinde der ersten Gangrichtung, das in der Mutter gebildet ist zum Verspannen der beiden Bauteile verschraubbar.

Mit der aus DE 10151383 A1 bekannten Toleranzausgleichsanordnung können auf einfache Weise Fertigungstoleranzen in einer Raumrichtung, insbesondere in Fahrzeugquerrichtung (Y-Richtung), ausgeglichen werden.

Bei einer Verbindungsanordnung in US 3 772 987 A, für einen Müllverdichter, enthält eine Montageplatte ein Paar flacher Kantenabschnitte, von denen jeder mit einem Paar ausgerichteter Schlitze versehen ist, um die Montageplatte an einer Basiswand einstellbar zu positionieren. In Fig. 5 ist die Basiswand mit einer Öffnung versehen, die geringfügig kleiner als der Umfang der Montageplatte ist. Die Basiswand ist ferner mit einer Vielzahl von quadratischen Öffnungen benachbart zum Rand der Öffnung versehen, die in Übereinstimmung mit der Anordnung der Schlitze in der Montageplatte angeordnet sind. Schrauben mit einer quadratischen Schulter sind so angeordnet, dass sich der Gewindeschaftabschnitt davon jeweils eines durch die jeweiligen vier Löcher erstreckt, wobei der Kopfabschnitt in die Basiswand eingreift und die quadratischen Schultern in die quadratischen Löcher eingreifen. Die Schrauben werden in Verbindung mit der Basiswand mittels Federklammern gehalten, die jeweils einen oberen Schenkel aufweisen. Ein Federklammer-Abschnitt hat ein gegabeltes Ende, das den Schraubenschaft überspannt, und einen gegenüberliegenden konkaven Schenkel, der an den Schraubenkopf angrenzt. Die Federklammer definiert effektiv ein U-Element, das sich um den Rand der die Basiswand definierenden Öffnung erstreckt und in Zuordnung dazu durch einfache seitliche Bewegung derselben über den Rand der Öffnung nach dem Einführen der Schraube durch die Öffnung eingebaut werden kann. Die Montageplatte ist an der Basiswand gesichert, indem die Schraubenschäfte durch die Schlitze nach oben geführt werden, wodurch die Montageplatte mittels einer geeigneten Mutter und einer Reibscheibe fest in Verbindung mit der Basiswand gehalten werden kann. Längliche Schlitze ermöglichen eine einstellbare Positionierung der Montageplatte an der Basiswand.

US 2012/0003034 A1 betrifft eine Befestigungsstruktur einer Harzdachplatte, um ein Sonnenschutzgehäuse daran zu befestigen. Das Sonnenschutzgehäuse umfasst einen Befestigungsabschnitt. Die Dachplatte enthält Kopplungsabschnitte. Der Befestigungsabschnitt und die Kopplungsabschnitte sind durch kombinierte Elemente aneinander befestigt. Jedes kombinierte Element wird durch Kombinieren eines Befestigungsbolzens und einer Blattfeder gebildet und in ein Langloch eingesetzt. Jedes kombinierte Element ermöglicht, dass der Befestigungsabschnitt und der zugehörige Kupplungsabschnitt entlang der Längsrichtung des Langlochs relativ verschoben werden, und ermöglicht, dass der Befestigungsabschnitt und der zugehörige Kupplungsabschnitt entlang der Axialrichtung des Befestigungsbolzens durch elastische Verformung der zugehörigen Tellerfeder relativ verschoben werden.

Der vorliegenden Erfindung liegt die Aufgabe zugrunde, Verbindungsmittel und eine Verbindungsanordnung anzugeben, mit der ein Toleranzausgleich in zwei Raumrichtungen ermöglicht ist, insbesondere in Fahrzeugquerrichtung (Y-Richtung) und in Fahrzeuglängsrichtung (X-Richtung). Die Verbindungsmittel und die Verbindungsanordnung sollten konstruktiv einfach sein, und aus möglichst wenigen Einzelteilen bestehen.

Angegeben wird von der Erfindung eine Verbindungsanordnung nach Anspruch 1 und ein Verfahren zur Herstellung einer Verbindung und zum Ausgleich fertigungs- und/oder montagebedingter Toleranzen zwischen Bauteilen nach Anspruch 7. Bevorzugte Ausführungsformen sind in den Unteransprüchen angegeben.

Nach einer grundlegenden Idee der Erfindung wird ein Toleranzausgleich mit einem Klemmelement erreicht, aufweisend einen ersten Klemmschenkel und einen zweiten Klemmschenkel, die federnd miteinander verbunden sind, wobei der erste Klemmschenkel gabelförmig mit einem ersten Zinken und einem zweiten Zinken ausgebildet ist. In einer Ausführungsform liegen die beiden Klemmschenkel einander gegenüber und sie können Gegenstände umgreifen, die durch die Klemmkraft des Klemmelements bzw. die Federkraft des Klemmelements ineinander gepresst werden. Zwischen dem ersten Zinken und dem zweiten Zinken ist eine längliche Öffnung gebildet. Die Zinken können einen Kopf eines Befestigungselements hintergreifen. Die Zinken können einen Stift oder Bolzen oder Schaft eines Verbindungselements auf zwei Seiten umgreifen. Der Stift, Bolzen oder Schaft ist entlang der länglichen Öffnung, die zwischen den Zinken gebildet ist, bzw. entlang der Zinken verschiebbar, sodass in diese Richtung ein Toleranzausgleich erfolgen kann, insbesondere ein Toleranzausgleich zwischen der Lage des Verbindungselements und der Lage eines Verkleidungsteils, welches über das Verbindungselement an einem Untergrund oder einem weiteren Verkleidungsteil befestigt werden soll. Mit dem Klemmelement wird insbesondere ein Verkleidungsteil an das Verbindungselement gepresst und ein Toleranzausgleich kann in Verlaufsrichtung der Zinken bzw. in Verlaufsrichtung der zwischen den Zinken gebildeten Öffnung erfolgen.

Das Klemmelement wird in dieser Erfindung auch als Klammer bezeichnet. Das Klemmelement kann einen Rücken aufweisen, der die beiden Klemmschenkel miteinander verbindet. Vorzugsweise ist der Rücken elastisch verformbar und stellt eine Klemmwirkung bereit. Das Klemmelement kann einstückig sein. Vorzugsweise ist das Klemmelement aus Metallblech. Der erste und der zweite Klemmschenkel, sowie die Zinken, sind vorzugsweise aus Metallblech. Die Erfindung betrifft in einem Aspekt das Klemmelement selbst, wie in dieser Beschreibung oder in Anspruch 1 genannt.

Die Begriffe "erstes", "zweites" etc. dienen bei gleichnamigen Dingen, wie "erstes" Bauteil und "zweites" Bauteil, als Nummerierungsbegriffe der Unterscheidung dieser Dinge.

Unter einem Verbindungsmittelsatz ist ein Montagesatz aus verschiedenen Verbindungsmitteln oder Verbindungsmittelelementen zu verstehen. Der Verbindungsmittelsatz kann auch als Bausatz bezeichnet werden. Mit dem oben erwähnten Verbindungsmittelsatz kann auf folgende Weise eine Verbindung zwischen Bauteilen mit Toleranzausgleich in zwei Raumrichtungen hergestellt werden:
Die Mutter des Verbindungsmittelsatzes ist fest mit einem sogenannten zweiten Bauteil verbindbar, beispielsweise formschlüssig und/oder kraftschlüssig und/oder stoffschlüssig verbindbar oder verbunden. Die Mutter kann als Schweißmutter ausgebildet sein und an dem zweiten Bauteil angeschweißt sein. Die Mutter kann mit dem zweiten Bauteil einstückig ausgebildet sein. Die Mutter ist insbesondere als Blindnietmutter ausgebildet.

Das Ausgleichselement des Verbindungsmittelsatzes ist so weit in die Mutter eindrehbar, dass ein erster Toleranzausgleich zu einem ersten Bauteil in einer Längsrichtung des Ausgleichselements herstellbar ist. Die Längsrichtung ist die Verstellrichtung des Ausgleichselements. Die Längsrichtung des Ausgleichselements ist beispielsweise die Längsrichtung eines Bolzens, eines Stiftes oder eines Schaftes des Ausgleichselements. Der Bolzen, Stift oder Schaft weist ein Gewinde auf, das in Verstellrichtung in die Mutter ein- oder ausdrehbar ist.

Der erwähnte auskragende Kopf des Ausgleichselements weist einen auskragenden Rand auf. Der Kopf ist insbesondere über einen erwähnten Stift, Bolzen oder Schaft des Ausgleichselements hervorkragend bzw. hervorstehend.

Das sogenannte erste Bauteil ist an den Kopf des Ausgleichselements in einer Lage anlegbar, in der ein zweiter Toleranzausgleich in einer Querrichtung herstellbar ist, wobei die Querrichtung quer zur oben erwähnten Längsrichtung des Ausgleichselements ist. Beispielsweise entspricht die Längsrichtung des Ausgleichselements einer Fahrzeugquerrichtung (Y-Richtung), beispielsweise wenn ein Seitenwandelement angebracht werden soll und die Toleranz in Y-Richtung mit dem Ausgleichselement erzielt werden soll. Die oben erwähnte Querrichtung, die quer zur Längsrichtung des Ausgleichselements ist, könnte in diesem Beispiel insbesondere der Wagenkastenlängsrichtung (X-Richtung) entsprechen. Betrachtet man den Verbindungsmittelsatz der vorliegenden Erfindung allein, so ist die Längsrichtung als Längsrichtung des Ausgleichselements definiert.

Der erste Zinken und der zweite Zinken des Klemmelements sind in Querrichtung, also quer zur Längsrichtung des Ausgleichselements, unter den auskragenden Kopf des Ausgleichselements schiebbar. Der erste Klemmschenkel des Klemmelements ist in Querrichtung über das erste Bauteil schiebbar, welches in passender Lage an den Kopf angelegt wurde, sodass das Klemmelement das erste Bauteil an den Kopf des Ausgleichselements presst. Beispielsweise kann ein Rand des ersten Bauteils, insbesondere eines Verkleidungselements, aufgrund einer Toleranz in Querrichtung (quer zur Längsrichtung des Ausgleichselements) verschieden weit von dem Kopf des Ausgleichselements, an dem das erste Bauteil anliegt, entfernt sein. Ein Unterschied in der Entfernung des Rands des ersten Bauteils von dem Kopf des Ausgleichselements kann durch die Länge des gabelförmigen ersten Klemmschenkels des Klemmelements ausgeglichen werden, nämlich durch die Länge des ersten und des zweiten Zinkens und der dazwischen gebildeten länglichen Öffnung. Durch die längliche Ausgestaltung der Zinken und der Öffnung dazwischen findet der Toleranzausgleich statt. Aufgrund der länglichen Ausgestaltung sind verschiedene Positionen des Ausgleichselements bzw. dessen Kopfes entlang der Zinken bzw. der länglichen Öffnung ermöglicht. Das Klemmelement kann soweit in Querrichtung verschoben werden, bis der ersten Klemmschenkel in eine Endlage gebracht ist, in der er Druck auf eine erste Seite des ersten Bauteils in Richtung des Kopfes des Ausgleichselements ausübt, der auf einer zweiten Seite des ersten Bauteils (üblicherweise der Rückseite) angeordnet ist.

In einer Ausführungsform der Erfindung weist das Klemmelement, vorzugsweise der zweite Klemmschenkel, ein erstes Rastelement auf, das mit einem zweiten Rastelement, das an dem ersten Bauteil angeordnet oder ausgebildet ist, zur Bildung einer formschlüssigen Verbindung, auch bezeichnet als Rastverbindung, zusammenwirken kann. Beispielsweise kann das erste Rastelement in des zweite Rastelement einrastbar sein, oder umgekehrt. Das erste Rastelement und das zweite Rastelement wirken zur Bildung einer formschlüssigen Verbindung zusammen. Das zweite Rastelement ist beispielsweise als Erhöhung der Vertiefung ausgebildet, insbesondere in Form eines Loches ausgebildet. Mit dieser Ausführungsform wird eine Sicherung des Klemmelements in Einbaulage erreicht. Das Rastelement kann an dem Klemmelement, insbesondere am zweiten Klemmschenkel, angebracht oder ausgebildet sein.

In einer Ausführungsform ragen bei dem Klemmelement der erste und der zweite Zinken des ersten Schenkels über das Ende des zweiten Schenkels heraus. Insbesondere weist der erste Klemmschenkel, aufweisend die beiden Zinken, eine Länge auf, welche eine Länge des zweiten Klemmschenkels um mindestens 25 %, vorzugsweise mindestens 50 %, übersteigt. Bei dieser Ausführungsform ist eine einfache Positionierung des ersten und des zweiten Zinkens ermöglicht, bevor der zweite Schenkel in seine Endlage verschoben wird. Dadurch kann das Klemmelement beim Zusammenbau besser geführt werden. Weiterhin ist dadurch eine Blindmontage erleichtert, da die Zinken zuerst das Ausgleichselement umfassen können bevor das erste Bauteil, insbesondere eine Verkleidung, in Eingriff gelangt.

Die erfindungsgemäße Verbindungsanordnung weist zusätzlich zu einem zuvor beschriebenen Verbindungsmittelsatz auch die zu verbindenden Bauteile auf. In der Verbindungsanordnung sind die Elemente des Verbindungsmittelsatzes in ihre Einbaulage und ihren relativen räumlichen Bezug zueinander gebracht. In der Verbindungsanordnung kann ein vorangehend beschriebener Verbindungsmittelsatz in jeglicher beschriebener Ausführungsform verwendet werden.

In einer Weiterbildung der Verbindungsanordnung weist das erste Bauteil ein zuvor bereits erwähntes zweites Rastelement auf und das Klemmelement, insbesondere am zweiten Klemmschenkel, weist ein erstes Rastelement auf, das mit dem ersten Rastelement eine Rastverbindung bildet. Dadurch kann das Klemmelement gegen ungewollte Demontage, beispielsweise durch Vibrationen im Fahrzeug, gesichert sein.

Das zweite Rastelement ist vorteilhafterweise eine Erhöhung, beispielsweise eine Nase, oder eine Vertiefung an oder in dem ersten Bauteil, die mit dem ersten Rastelement zur Bildung einer formschlüssigen Verbindung zusammen wirkt. In einer vorteilhaften Ausgestaltung ist das zweite Rastelement eine Vertiefung, in die das erste Rastelement einrasten kann. Dabei kann eine formschlüssige Verbindung gebildet werden. Beispielsweise ist die Vertiefung ein Loch, insbesondere ein Durchgangsloch oder ein Sackloch.

In einer besonders vorteilhaften Weiterbildung ist das zweite Rastelementeine längliche Vertiefung, in welcher das erste Rastelement des Klemmelements verschiebbar ist, nämlich in Längsrichtung der länglichen Vertiefung. Durch eine solche Verschiebbarkeit kann ein weiterer Toleranzausgleich erfolgen. Insbesondere weist die längliche Vertiefung eine Richtung (auch bezeichnet als Längsrichtung der länglichen Vertiefung) auf, die senkrecht zur Längsrichtung des Ausgleichselements ist und die senkrecht zur oben erwähnten Querrichtung, also der Erstreckungsrichtung der Zinken des Klemmelements, ist. Dadurch wird ein Toleranzausgleich auch in einer dritten Raumrichtung ermöglicht, insbesondere einer Vertikalrichtung (Z-Richtung) eines Schienenfahrzeugwagenkastens.

Insbesondere ist das zweite Rastelement ein Langloch. Der zweite Klemmschenkel kann in das erste Bauteil das Langloch einrasten, mit dem ersten Rastelement. Eine solche Verbindung kann formschlüssig ausgebildet sein. Durch eine solche Verbindung kann das Klemmelement gegen ungewollte Demontage, insbesondere in Fahrzeuglängsrichtung (X-Richtung), beispielsweise durch Vibrationen im Fahrzeug, gesichert sein. Weiterhin wird durch das Langloch eine Möglichkeit zum Toleranzausgleich in Längsrichtung des Langlochs (insbesondere Z-Richtung) zwischen dem ersten Bauteil und dem zweiten Bauteil gewährt

Die Verbindung ist vorzugsweise so ausgestaltet, dass durch Aufbiegen des Klemmelements im elastischen Bereich die Verbindung auch wieder zerstörungsfrei für Verkleidung und Klemmelement demontiert werden kann. Das Klemmelement ist vorzugsweise so ausgestaltet oder dimensioniert, dass es im elastischen Bereich soweit aufbiegbar ist, dass die Verbindung gelöst werden kann.

Das Ausgleichselement kann mit der Mutter eine formschlüssige Verbindung bilden. Das Ausgleichselement kann mit der Mutter weiterhin eine kraftschlüssige Verbindung bilden. Die kraftschlüssige Verbindung kann selbsthemmend sein. Dadurch kann erreicht werden, dass das Ausgleichselement nur mit Werkzeug eingestellt, verstellt oder demontiert werden kann, und es ist eine vibrationssichere Verbindung ermöglicht.

In einem weiteren Aspekt betrifft die Erfindung ein Schienenfahrzeug, das eine zuvor beschriebene, erfindungsgemäße Verbindungsanordnung aufweist. Insbesondere ist ein erwähntes erstes Bauteil eine Wandverkleidung oder eine Fensterverkleidung, beispielsweise eine Kunststoffverkleidung. Insbesondere ist ein erwähntes zweites Bauteil ein Teil einer Rohbaustruktur eines Wagenkastens, insbesondere ein Träger oder eine Platte, insbesondere aus Metall. Beispielhafte Schienenfahrzeuge sind U-Bahnen, S-Bahnen, Straßenbahnen, Nahverkehrszüge und Fernverkehrszüge.

In noch einem Aspekt betrifft die Erfindung ein Verfahren zur Herstellung einer Verbindung zwischen einem ersten Bauteil und einem zweiten Bauteil mit Ausgleich fertigungs- und/oder montagebedingter Toleranzen zwischen den Bauteilen, aufweisend
- Bereitstellen eines zweiten Bauteils, welches mit einer Mutter verbunden ist oder eine Mutter aufweist, die ein Innengewinde aufweist,
- Eindrehen eines Ausgleichselements, das ein Außengewinde, welches passend zu dem Innengewinde der Mutter ist, und einen auskragenden Kopf aufweist, in die Mutter soweit, dass ein erster Toleranzausgleich in einer Längsrichtung des Ausgleichselements hergestellt wird,
- Anlegen des ersten Bauteils an den Kopf des Ausgleichselements in gewünschter Lage in einer Querrichtung, die quer zur Längsrichtung des Ausgleichselements ist, sodass ein zweiter Toleranzausgleich in einer Querrichtung hergestellt wird,
- Befestigen des ersten Bauteils mit einem Klemmelement mit einem ersten Klemmschenkel und einem zweiten Klemmschenkel, die federnd miteinander verbunden sind, wobei der erste Klemmschenkel gabelförmig mit einem ersten Zinken und einem zweiten Zinken ausgebildet ist, aufweisend
- Schieben des ersten Zinkens und des zweiten Zinkens des Klemmelements in der Querrichtung unter den auskragenden Kopf des Ausgleichselements, sodass der erste Zinken und der zweite Zinken den Kopf hintergreifen,
- Schieben des zweiten Klemmschenkels über das erste Bauteil, sodass das Klemmelement das erste Bauteil gegen den Kopf des Ausgleichselements presst.

In dem Verfahren können alle Gegenstände und gegenständlichen Merkmale zur Anwendung kommen, die zuvor in dieser Beschreibung beschrieben sind, die insbesondere strukturell und funktionell beschrieben sind. Ferner kann das Verfahren Schritte aufweisen, die bereits zuvor beschrieben sind, beispielsweise bei der möglichen Verwendung erfindungsgemäßer Gegenstände.

Nachfolgend wird die Erfindung anhand von Ausführungsbeispielen beschrieben. Es zeigen:
- Fig. 1a, 1b: ein Klemmelement in zwei Ansichten,
- Fig. 2: die Verbindung eines Ausgleichselements und eines ersten Bauteils mit einem Klemmelement im Stadium des Zusammenbaus,
- Fig. 3a, 3b: einen Zusammenbau aus erstem Bauteil und Ausgleichselement mit einem Klemmelement in zwei Ansichten, von hinten und von vorn, und
- Fig. 4: eine Verbindungsanordnung, bei der zwei Bauteile mittels einer Mutter, eines Ausgleichselements und eines Klemmelements verbunden sind.

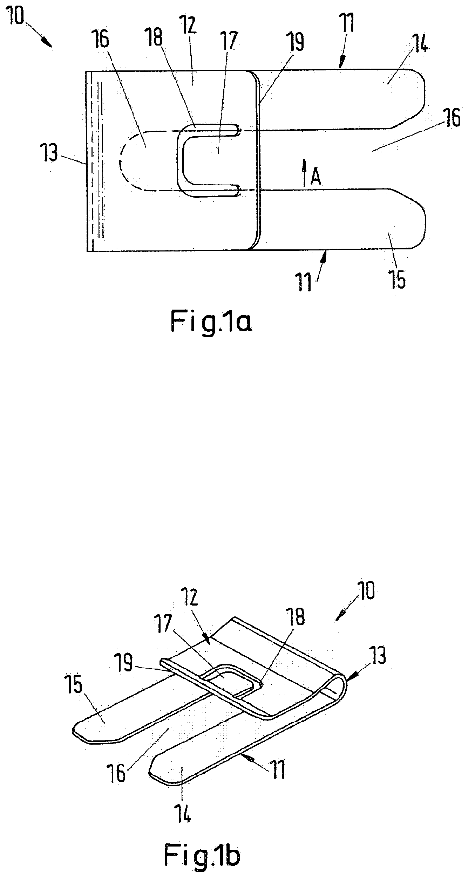

Fig. 1a zeigt ein Klemmelement 10 von oben und Fig. 1b von schräg oben. Der erste Klemmschenkel 11 und der zweite Klemmschenkel 12 liegen einander gegenüber und sind durch den Rücken 13 verbunden. Das Klemmelement 10 ist einstückig aus gestanztem und gebogenem Blech ausgeführt.

Der erste Klemmschenkel 11 weist den ersten Zinken 14 und den zweiten Zinken 15 auf, zwischen denen die längliche Öffnung 16 gebildet ist.

Der zweite Klemmschenkel 12 weist das erste Rastelement 17 in Form einer nach innen gebogenen Lasche auf. Die Lasche ist durch eine Ausstanzung 18 in dem zweiten Klemmschenkel 12 gebildet. Der Vorderrand 19 des zweiten Klemmschenkels 12 ist nach oben gebogen, um eine Montage des Klemmelements 10 zu erleichtern.

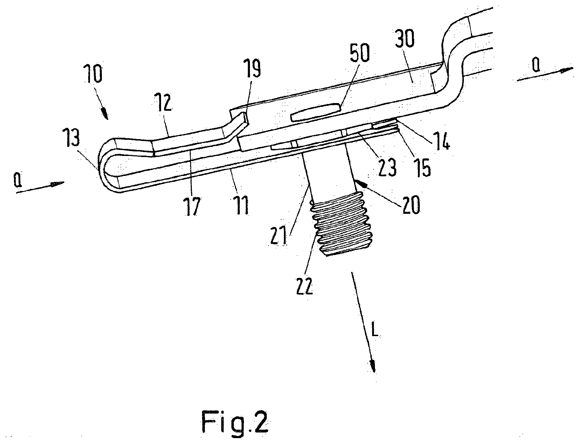

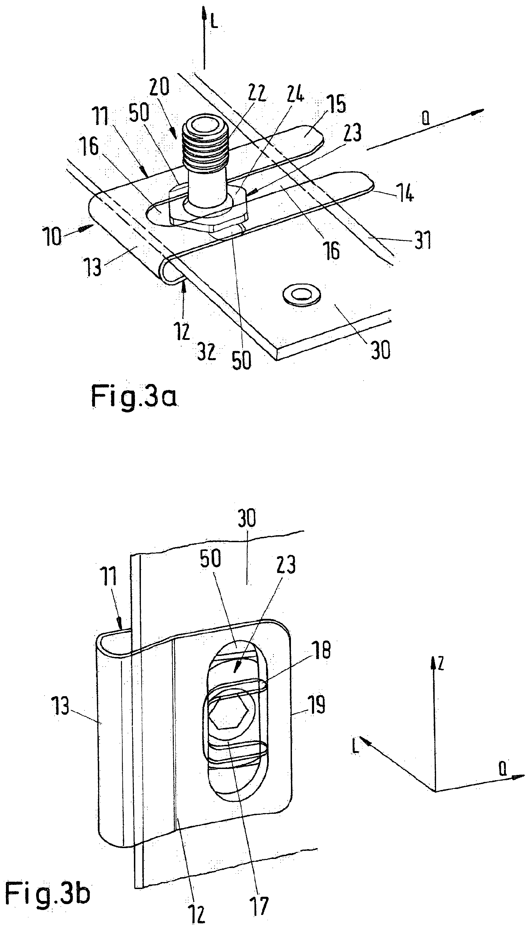

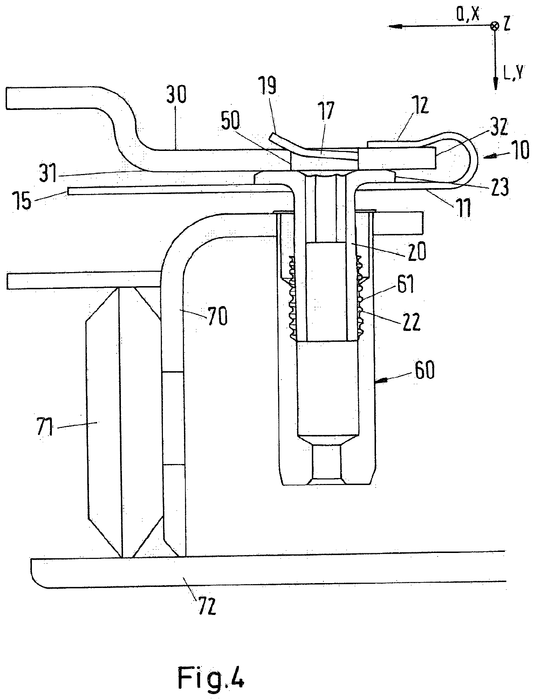

Fig. 2 zeigt einen beispielhaften Zusammenbau. Gezeigt ist das Ausgleichselement 20 in Form einer hohl ausgeführten Buchse (vergleiche mit Fig. 3a und 4) mit dem Schaftteil 21, an dem ein Gewinde 22 ausgeführt ist, und dem auskragenden Kopf 23.

Das Ausgleichselement 20 ist mit dem Gewinde 22 in Längsrichtung L in eine in Fig. 2 nicht gezeigte Mutter (vergleiche mit Fig. 4) eindrehbar.

An den auskragenden Kopf 23 wird das erste Bauteil 30 angelegt, das eine hier ausschnittweise gezeigte Wandverkleidung ist. Ein Toleranzausgleich in einer zweiten Richtung, der Querrichtung Q, kann bei dem Anlegen des ersten Bauteils 30 an dem Kopf 23 erfolgen. Anders ausgedrückt wird das erste Bauteil 30 so angelegt, dass es in der Querrichtung Q relativ zu einem Wagenkastenrohbau passend ist. Hierbei muss das gezeigte Langloch 50, als zweites Rastelement, in dem zweiten Bauteil 30 nicht fluchtend zu dem Schaft 21 des Ausgleichselements 20 sein, sondern kann in der Ansicht der Fig. 2 auch gegenüber dem Schaft 21 nach rechts oder nach links verschoben sein. Bedingung ist lediglich, dass das erste Bauteil 30 mit seiner Rückseite noch an den Kopf 23 anliegt.

Anschließend wird das Klemmelement 10 angebracht. Durch die langen Zinken 14, 15, die auch als Einführlaschen bezeichnet werden, wird zunächst unter den Kopf 23 des Ausgleichselements 20 gefasst und dann die Federklammer 10 in Querrichtung Q auf das erste Bauteil 30 geschoben. Hierbei bewegt sich das Klemmelement 10 in Querrichtung Q derart, dass der Schaft 21 des Ausgleichselements 20 in die längliche Öffnung 16 (siehe Fig. 1a/b) eingeschoben wird. Die längliche Öffnung 16 dient hierbei als Führung in Querrichtung Q. Die Führung des Klemmelements 10 wird durch den überstehenden ersten Klemmschenkel 11 bzw. die über den zweiten Klemmschenkel 12 überstehenden Zinken 14, 15 erleichtert.

Wenn der zweite, obere Klemmschenkel 12 den Rand des ersten Bauteils 30 erreicht, wird das erste Bauteil 30 unter den abgeschrägten Rand 19 geschoben und der zweite Klemmschenkel 12 nach oben gebogen, wobei im Wesentlichen der Rücken 13 des Klemmelements 10 elastisch verformt wird. Die Bewegung in Querrichtung Q wird solange fortgesetzt, bis die Sicherungslasche 17 in das Langloch 50 einrastet.

In Fig. 3a und 3b ist der Zusammenbau zwischen Ausgleichselement 20, erstem Bauteil 30 und Klemmelement 10 im Endzustand gezeigt. In Fig. 3a ist gezeigt, wie die Zinken 14, 15 des Klemmelement 10 den auskragenden Rand 24 des Kopfes 23 hintergreifen. Durch die Klemmwirkung des Klemmelements 10 werden das Ausgleichselement 20 und das erste Bauteil 30 aneinander gepresst. Durch die gewählte transparente Darstellungsweise des Klemmelements 10 ist unterhalb des ersten Zinkens 14 und des zweiten Zinkens 15 der Kopf 23 zu sehen und unterhalb des Kopfes 23 das Langloch 50 in dem ersten Bauteil 30 zu sehen. Ebenfalls ist erkennbar, dass das Ausgleichselement 20 als hohle Buchse ausgeführt ist. Alternativ könnte auch eine massive Schraube mit einem verbreiterten Kopf eingesetzt werden.

In der Ansicht von vorn bzw. von oben auf das erste Bauteil 30 ist zu sehen, dass die Sicherungslasche 17 in das Langloch 50 eingerastet ist. Dadurch wird das Klemmelement 10 in der gezeigten Einbauposition gesichert. In der transparent gewählten Darstellung ist hinter der Lasche 17 bzw. hinter dem zweiten Klemmschenkel 12 der Kopf 23 des Ausgleichselements 30 zu sehen, der auf der gegenüberliegenden Seite des ersten Bauteils 30 anliegt.

In Fig. 3b ist erkennbar, dass die Lasche 17 in Richtung Z nach oben oder nach unten in dem Langloch 50 verschiebbar ist. Die Richtung Z ist beispielsweise die Vertikalrichtung eines Schienenfahrzeugs. Durch das Langloch 50 wird somit ein Toleranzausgleich in einer weiteren Raumrichtung, nämlich Z, ermöglicht.

In Fig. 4 ist eine vollständige Verbindungsanordnung inklusive Mutter 60 und zweitem Bauteil 70 gezeigt.

Das zweite Bauteil 70 ist ein Teil eines Wagenkastenrohbaus, in diesem Fall ein L-förmiges Element, das an einem weiteren Trägerelement 71 befestigt ist. Weiterhin gezeigt ist eine Rohbauaußenwand 72.

Die Mutter 60 ist eine Blindnietmutter mit dem Innengewinde 61, das passend zu dem Außengewinde 22 der Ausgleichsbuchse 20 ist. Die aus Metall gefertigte Blindnietmutter 60 ist mit dem zweiten Bauteil 70 vernietet bzw. an das erste Bauteil genietet Beim Zusammenbau der in Fig. 4 gezeigten Verbindungsanordnung wird zunächst das Ausgleichselement 20 mit dem Gewinde 22 in das Gewinde 61 der Blindnietmutter 60 eingedreht, bis die gewünschte Höhe in Richtung L, die im Speziellen eine Querrichtung Y eines Schienenfahrzeugwagenkastens ist, eingedreht. Anschließend wird weiter verfahren, wie schon anhand der Fig. 2 zuvor erläutert, d.h. das erste Bauteil 30 wird auf den Kopf 23 aufgelegt, sodass es in Querrichtung Q die gewünschte Lage einnimmt. Anschließend wird die Klammer 10 aufgeschoben, in der Ansicht der Fig. 4 von rechts nach links, nach dem Mechanismus, der in Fig. 2 (dort von links nach rechts) gezeigt ist. Die Endposition der Klammer 10 ist erreicht, wenn die Lasche 17 in das Langloch 50 einrastet.

Anhand von Fig. 4 kann, in Verbindung mit Fig. 3a, nochmals der Toleranzausgleich in Querrichtung Q erläutert werden, die beispielsweise eine Längsrichtung X eines Fahrzeugs ist. Die relative Lage von zweitem Bauteil 70 und erstem Bauteil 30 muss nicht derart sein, dass das Ausgleichselement 20 unterhalb des Langloches 50 liegt, wie in Fig. 3a und Fig. 4 gezeigt. Beispielsweise könnte das erste Bauteil 30 in Fig. 4 so weit nach rechts verschoben werden, dass der Kopf 23 des Ausgleichselements 20 neben dem Langloch 50 zum Liegen kommt, also links neben dem Langloch 50. Eine Verschiebung ist so weit möglich, bis der Kopf 23 den Rand 31 erreicht und damit das Ende der Auflagefläche.

In die andere Richtung wäre eine Verschiebung des Bauteils 30 so weit möglich, bis der Kopf 23 den Rand 32 erreicht. Durch die lang ausgebildeten Zinken 14, 15 und die Möglichkeit der Verschiebung des Schaftes 21 des Ausgleichselements 20 innerhalb der Öffnung 16 (siehe Fig. 3a) wird in jedem Fall der Kopf 23 von den Zinken 14, 15 hintergriffen und das erste Bauteil 30 gegen den Kopf 23 gepresst. Die Einbaulage der Klammer 10 relativ zu dem ersten Bauteil 30 bleibt immer die gleiche, da sie durch die Rastposition der Lasche 17 in dem Langloch 50 festgelegt ist.

## Patentansprüche

1. Verbindungsanordnung zum Ausgleich fertigungs- und/oder montagebedingter Toleranzen zwischen Bauteilen (30, 70), aufweisend
- einen Verbindungsmittelsatz aufweisend
- eine Mutter (60), die ein Innengewinde (61) aufweist, wobei die Mutter fest mit einem zweiten Bauteil (70) verbindbar ist
- ein Ausgleichselement (20), das ein Außengewinde (22), welches passend zu dem Innengewinde ist, und einen auskragenden Kopf (23) aufweist, wobei das Ausgleichselement (20) soweit in die Mutter (60) eindrehbar ist, dass ein erster Toleranzausgleich zu einem ersten Bauteil (30) in einer Längsrichtung (L) des Ausgleichselements herstellbar ist,
- ein Klemmelement (10), aufweisend
einen ersten Klemmschenkel (11) und einen zweiten Klemmschenkel (12), die federnd miteinander verbunden sind, wobei der erste Klemmschenkel (11) gabelförmig mit einem ersten Zinken (14) und einem zweiten Zinken (15) ausgebildet ist,
wobei
- das erste Bauteil (30) an den Kopf (23) des Ausgleichselements in einer Lage anlegbar ist, in der ein zweiter Toleranzausgleich in einer Querrichtung (Q) herstellbar ist, wobei die Querrichtung (Q) quer zur Längsrichtung (L) des Ausgleichselements (20) ist,
- der erste Zinken (14) und der zweite Zinken (15) in der Querrichtung (Q) unter den auskragenden Kopf (23) des Ausgleichselements (20) schiebbar sind, und
- der zweite Klemmschenkel (12) in der Querrichtung (Q) über das erste Bauteil (30) schiebbar ist, sodass das Klemmelement (10) das erste Bauteil (30) an den Kopf (23) des Ausgleichselements (20) presst
- das erste Bauteil,
- das zweite Bauteil,
**dadurch gekennzeichnet, dass**
das erste und das zweite Bauteil mit dem Verbindungsmittelsatz derart miteinander verbunden sind, dass
- die Mutter (60) fest mit dem zweiten Bauteil (70) verbunden ist,
- das Ausgleichselement (20) in die Mutter (60) eingedreht ist,
- das erste Bauteil (30) an den Kopf (23) des Ausgleichselements (20) anliegend ist,
- der erste Zinken (14) und der zweite Zinken (15) des Klemmelements (10) den auskragenden Kopf (23) des Ausgleichselements (20) hintergreifen, und
- der zweite Klemmschenkel (12) auf dem ersten Bauteil (30) anliegt, sodass das Klemmelement (10) das erste Bauteil (30) gegen den Kopf (23) des Ausgleichselements (20) presst.

2. Verbindungsanordnung nach Anspruch 1, wobei der erste und der zweite Zinken (14, 15) des ersten Klemmschenkels (11) über das Ende des zweiten Klemmschenkels (12) herausragen.

3. Verbindungsanordnung nach einem der vorangehenden Ansprüche , wobei das erste Bauteil (30) ein zweites Rastelement (50) aufweist, und das Klemmelement (10) ein erstes Rastelement (17) aufweist, und das erste Rastelement (17) und das zweite Rastelement (50) eine formschlüssige Verbindung bilden.

4. Verbindungsanordnung nach Anspruch 3, wobei das zweite Rastelement (50) eine Vertiefung oder eine Erhöhung ist.

5. Verbindungsanordnung nach Anspruch 4, wobei das zweite Rastelement eine längliche Vertiefung (50) ist, entlang der das erste Rastelement (17) verschiebbar ist, oder eine längliche Erhöhung ist, entlang der das erste Rastelement (17) verschiebbar ist.

6. Schienenfahrzeug, aufweisend eine Verbindungsanordnung nach einem oder mehreren der Ansprüche 1-5.

7. Verfahren zur Herstellung einer Verbindung zwischen einem ersten Bauteil (30) und einem zweiten Bauteil (70) mit Ausgleich fertigungs- und/oder montagebedingter Toleranzen zwischen den Bauteilen (30, 70), aufweisend
- Bereitstellen eines zweiten Bauteils (70), welches mit einer Mutter (60) verbunden ist oder eine Mutter aufweist, die ein Innengewinde (61) aufweist,
- Eindrehen eines Ausgleichselements (20), das ein Außengewinde (22), welches passend zu dem Innengewinde (61) der Mutter (60) ist, und einen auskragenden Kopf (23) aufweist, in die Mutter soweit, dass ein erster Toleranzausgleich in einer Längsrichtung (L) des Ausgleichselements (20) hergestellt wird,
- Anlegen des ersten Bauteils (30) an den Kopf (23) des Ausgleichselements in gewünschter Lage in einer Querrichtung (Q), die quer zur Längsrichtung (L) des Ausgleichselements (20) ist, sodass ein zweiter Toleranzausgleich in der Querrichtung (Q) hergestellt wird,
- Befestigen des ersten Bauteils (30) mit einem Klemmelement (10) mit einem ersten Klemmschenkel (11) und einem zweiten Klemmschenkel (12), die federnd miteinander verbunden sind, wobei der erste Klemmschenkel (11) gabelförmig mit einem ersten Zinken (14) und einem zweiten Zinken (15) ausgebildet ist, aufweisend
- Schieben des ersten Zinkens (14) und des zweiten Zinkens (15) des Klemmelements (10) in der Querrichtung (Q) unter den auskragenden Kopf (23) des Ausgleichselements (20), sodass der erste Zinken (14) und der zweite Zinken (15) den Kopf (23) hintergreifen,
- Schieben des zweiten Klemmschenkels (12) über das erste Bauteil (30), sodass das Klemmelement (10) das erste Bauteil (30) gegen den Kopf (23) des Ausgleichselements (20) presst.

## Claims

1. A connection system for compensating for manufacturing- and/or assembly-induced tolerances between components (30, 70), comprising:
- a set of connection means, comprising:
- a nut (60) including an internal thread (61), the nut being fixedly connectable to a second component (70);
- a compensating element (20) including an external thread (22), which matches the internal thread, and a projecting head (23), the compensating element (20) being screwable into the nut (60) to such an extent that a first tolerance compensation with respect to a first component (30) can be created in a longitudinal direction (L) of the compensating element;
- a clamping element (10), comprising:
a first clamping leg (11) and a second clamping leg (12), which are connected to one another in a spring-loaded manner, the first clamping leg (11) having a fork-like design including a first tine (14) and a second tine (15),
wherein
- it being possible to place the first component (30) against the head (23) of the compensating element in a position in which a second tolerance compensation can be created in a transverse direction (Q), the transverse direction (Q) being transverse to the longitudinal direction (L) of the compensating element (20);
- it being possible to push the first tine (14) and the second tine (15) in the transverse direction (Q) beneath the projecting head (23) of the compensating element (20); and
- it being possible to push the second clamping leg (12) in the transverse direction (Q) over the first component (30) so that the clamping element (10) presses the first component (30) against the head (23) of the compensating element (20);
- the first component; and
- the second component,
**characterized in that**
the first and second components are connected to one another by way of the set of connection means in such a way that
- the nut (60) is fixedly connected to the second component (70);
- the compensating element (20) is screwed into the nut (60);
- the first component (30) rests against the head (23) of the compensating element (20);
- the first tine (14) and the second tine (15) of the clamping element (10) latch over the projecting head (23) of the compensating element (20); and
- the second clamping leg (12) rests against the first component (30) so that the clamping element (10) presses the first component (30) against the head (23) of the compensating element (20).

2. The connection system according to claim 1, wherein the first and second tines (14, 15) of the first clamping leg (11) protrude over the end of the second clamping leg (12).

3. A connection system according to any one of the preceding claims, wherein the first component (30) comprises a second detent element (50), and the clamping element (10) comprises a first detent element (17), and the first detent element (17) and the second detent element (50) form a form-locked connection.

4. The connection system according to claim 3, wherein the second detent element (50) is a depression or an elevation.

5. The connection system according to claim 4, wherein the second detent element is an elongated depression (50), along which the first detent element (17) is displaceable, or an elongated elevation, along which the first detent element (17) is displaceable.

6. A rail vehicle, comprising a connection system according to one or more of claims 1 to 5.

7. A method for establishing a connection between a first component (30) and a second component (70), including compensating for manufacturing- and/or assembly-induced tolerances between the components (30, 70), comprising:
- providing a second component (70), which is connected to a nut (60) or comprises a nut including an internal thread (61);
- screwing a compensating element (20), including an external thread (22), which matches the internal thread (61) of the nut (60), and a projecting head (23), into the nut to such an extent that a first tolerance compensation in a longitudinal direction (L) of the compensating element (20) is created;
- placing the first component (30) against the head (23) of the compensating element in a desired position in a transverse direction (Q), which is transverse to the longitudinal direction (L) of the compensating element (20), so that a second tolerance compensation in the transverse direction (Q) is created;
- attaching the first component (30) by way of a clamping element (10) comprising a first clamping leg (11) and a second clamping leg (12), which are connected to one another in a spring-loaded manner, the first clamping leg (11) having a fork-like design including a first tine (14) and a second tine (15), comprising:
- pushing the first tine (14) and the second tine (15) of the clamping element (10) in the transverse direction (Q) beneath the projecting head (23) of the compensating element (20), so that the first tine (14) and the second tine (15) latch over the head (23); and
- pushing the second clamping leg (12) over the first component (30) so that the clamping element (10) presses the first component (30) against the head (23) of the compensating element (20).

## Revendications

1. Agencement de raccordement pour la compensation de tolérances causées par la fabrication et/ou le montage entre des composants (30, 70), comprenant
- un ensemble de moyens de raccordement comprenant
- un écrou (60), qui comprend un filetage intérieur (61), l'écrou pouvant être raccordé de manière fixe avec un deuxième composant (70),
- un élément de compensation (20), qui comprend un filetage extérieur (22), qui est adapté au filetage intérieur, et une tête en saillie (23), l'élément de compensation (20) pouvant être vissé dans l'écrou (60) jusqu'à réaliser une première compensation de tolérance par rapport à un premier composant (30) dans une direction longitudinale (L) de l'élément de compensation,
- un élément de serrage (10), comprenant
une première branche de serrage (11) et une deuxième branche de serrage (12), qui sont raccordées élastiquement entre elles, la première branche de serrage (11) étant configurée en forme de fourche avec une première dent (14) et une deuxième dent (15),
- le premier composant (30) pouvant être disposé sur la tête (23) de l'élément de compensation à une position dans laquelle une deuxième compensation de tolérance peut être réalisée dans une direction transversale (Q), la direction transversale (Q) étant transversale à la direction longitudinale (L) de l'élément de compensation (20),
- la première dent (14) et la deuxième dent (15) pouvant être poussées dans la direction transversale (Q) en dessous de la tête en saillie (23) de l'élément de compensation (20), et
- la deuxième branche de serrage (12) pouvant être poussée dans la direction transversale (Q) au-dessus du premier composant (30), de telle sorte que l'élément de serrage (10) presse le première composant (30) sur la tête (23) de l'élément de compensation (20),
- le premier composant,
- le deuxième composant,
**caractérisé en ce que**
le premier et le deuxième composant sont raccordés entre eux avec l'ensemble de moyens de raccordement, de telle sorte que
- l'écrou (60) est raccordé de manière fixe avec le deuxième composant (70),
- l'élément de compensation (20) est vissé dans l'écrou (60),
- le premier composant (30) est attenant à la tête (23) de l'élément de compensation (20),
- la première dent (14) et la deuxième dent (15) de l'élément de serrage (10) viennent en prise par derrière avec la tête en saillie (23) de l'élément de compensation (20), et
- la deuxième branche de serrage (12) repose sur le premier composant (30), de telle sorte que l'élément de serrage (10) presse le premier composant (30) contre la tête (23) de l'élément de compensation (20).

2. Agencement de raccordement selon la revendication 1, dans lequel la première et la deuxième dent (14, 15) de la première branche de serrage (11) dépassent au-dessus de l'extrémité de la deuxième branche de serrage (12) .

3. Agencement de raccordement selon l'une quelconque des revendications précédentes, dans lequel le premier composant (30) comprend un deuxième élément d'encliquetage (50), et l'élément de serrage (10) comprend un premier élément d'encliquetage (17), et le premier élément d'encliquetage (17) et le deuxième élément d'encliquetage (50) forment un raccordement par accouplement de formes.

4. Agencement de raccordement selon la revendication 3, dans lequel le deuxième élément d'encliquetage (50) est un creux ou une élévation.

5. Agencement de raccordement selon la revendication 4, dans lequel le deuxième élément d'encliquetage est un creux oblong (50), le long duquel le premier élément d'encliquetage (17) peut être déplacé, ou une élévation oblongue, le long de laquelle le premier élément d'encliquetage (17) peut être déplacé.

6. Véhicule ferroviaire, comprenant un agencement de raccordement selon une ou plusieurs des revendications 1 à 5.

7. Procédé de réalisation d'un raccordement entre un premier composant (30) et un deuxième composant (70) avec compensation de tolérances causées par la fabrication et/ou le montage entre les composants (30, 70), comprenant
- la fourniture d'un deuxième composant (70), qui est raccordé à un écrou (60) ou comprend un écrou, qui comprend un filetage intérieur (61),
- le vissage d'un élément de compensation (20), qui comprend un filetage extérieur (22), qui est adapté au filetage intérieur (61) de l'écrou (60), et une tête en saillie (23), dans l'écrou jusqu'à réaliser une première compensation de tolérance dans une direction longitudinale (L) de l'élément de compensation (20),
- la disposition du premier composant (30) sur la tête (23) de l'élément de compensation à une position souhaitée dans une direction transversale (Q), qui est transversale à la direction longitudinale (L) de l'élément de compensation (20), de manière à réaliser une deuxième compensation de tolérance dans la direction transversale (Q),
- la fixation du premier composant (30) avec un élément de serrage (10) pourvu d'une première branche de serrage (11) et d'une deuxième branche de serrage (12), qui sont raccordées élastiquement entre elles, la première branche de serrage (11) étant configurée en forme de fourche avec une première dent (14) et une deuxième dent (15), comprenant
- la poussée de la première dent (14) et de la deuxième dent (15) de l'élément de serrage (10) dans la direction transversale (Q) en dessous de la tête en saillie (23) de l'élément de compensation (20), de telle sorte que la première dent (14) et la deuxième dent (15) viennent en prise par derrière avec la tête (23),
- la poussée de la deuxième branche de serrage (12) au-dessus du premier composant (30), de telle sorte que l'élément de serrage (10) presse le premier composant (30) contre la tête (23) de l'élément de compensation (20) .
